# EUROPEAN PATENT APPLICATION

(11) **EP 4 627 919 A1**
(43) Date of publication of application: **08.10.2025**
(21) Application number: 25168340.5
(22) Date of filing: 03.04.2025
(51) Int. Cl.: A01N 37/20, A01P 3/00

(54) **METHOD FOR TREATMENT OF SCAB IN APPLES AND PEARS**

(30) Priority: 03.04.2024 EP 24168337
(71) Applicant: Globachem NV, 3800 Sint-Truiden (BE)
(72) Inventor: PARENT, Levi, 3800 Sint-Truiden (BE); REYBROUCK, Stefaan, 3800 Sint-Truiden (BE)
(74) Representative: Calysta NV

(57) **Abstract**

The present invention relates to a method of controlling, preventing and/or treating a phytopathogenic fungus causing or capable of causing scab infection in apple and/or pear plants.

The invention further relates to the use of zoxamide as an active agent against scab infection in apple and/or pear plants, and agricultural compositions thereof.

## Description

### Technical field

The invention relates to the field of agriculture, more specifically to the field of agricultural fungicides.

### Background

Apple and pear scab are two different fungal diseases that look very similar and are controlled in similar manners in home gardens and landscapes.

Both fungi cause spotting and scabbing of fruit and leaves, especially during wet seasons.

Apple scab is a disease caused by the fungus, *Venturia inaequalis,* which spreads by airborne spores and survives the winter on fallen leaves. It infects crabapples and apples, and a few other trees and shrubs including *Cotoneaster*, *Pyracantha* and *Sorbus*.

A closely related fungus, *Venturia pyrina,* causes a similar disease called pear scab on fruiting and ornamental pears.

It is therefore one of the objects of the invention to provide an effective treatment of scab in apples and pears, and surprisingly it was found that zoxamide has high activity against scab-causing fungi.

### Brief description of the invention

The invention relates to a method for controlling, preventing and/or treating a phytopathogenic fungus causing or capable of causing scab infection in apple and/or pear plants, wherein the method comprises applying a fungicidally effective amount of zoxamide to a said plant, at least one part of a said plant and/or at least one seed of a said plant, or to the soil in which a said plant is growing or in which it is desired to grow.

The invention also relates to use of a fungicidally effective amount of zoxamide for controlling, preventing and/or treating a phytopathogenic fungus causing or capable of causing scab infections in apple and pear plants, wherein said zoxamide is applied to a said plant, at least one part of a said plant and/or at least one seed of a said plant, or the soil in which a said plant is growing or in which it is desired to grow.

In addition, the invention relates to a fungicidally effective amount of zoxamide or a composition comprising a fungicidally effective amount of zoxamide, for controlling, preventing and/or treating a phytopathogenic fungus causing or capable of causing scab infections in apple and pear plants, wherein said zoxamide is applied to a said plant, at least one part of a said plant and/or at least one seed of a said plant, or the soil in which a said plant is growing or in which it is desired to grow.

The invention is based on the surprising finding that zoxamide exhibits high activity against thescab-causing fungi, *Venturia inaequalis* and *Venturia pyrina*, and can be used to prevent, control and/or to treat scab disease in apples and pears.

### Definitions

For the purpose of the present disclosure, the following terms and abbreviations have the following meaning:
As used herein, term "fungicidally effective amount" means the relative amount that is effective to inhibit or control fungus growth rate, increase mortality or eradicate the fungus when the fungicidal composition is applied to the target fungus at a given application rate.

As used herein, and unless otherwise indicated, the term "about" when used in connection with numeric values, parameters or numerical ranges such as amounts, volumes, volume ratios, volume percentages, weight ratios, weight percentages, or application rates of ingredients of a composition, means an amount, a volume, a volume ratio, a volume percentage, a weight ratio, a weight percentage, or an application rate that is recognized by those of ordinary skill in the art to provide a desired effect equivalent to that obtained from the specified amount, volume, volume ratio, volume percentage, weight ratio, weight percentage, or application rate, is encompassed.

Specifically, the term 'about' contemplates an amount, a weight ratio, or an application rate within ±30%, ±25%, ±20%, ±15%, ±10%, or ±5% of the specified numerical value or range in question.

Any numerical range disclosed herein is meant to include all sub-ranges subsumed within the recited one. For instance, the range from 1 to 10 includes all sub-ranges between and including the recited minimal value 1 and the recited maximum value 10 and any value in-between, including any and all decimal values.

Terms "composition" and "formulation" are used interchangeably throughout the text and are meant as having the same meaning.

In Table 1. and Table 2., the following terms have the following meaning:

| | |
|---|---|
| %S | - severity |
| %E | - efficacy |
| 0% | - disease progressed to maximum |
| 100% | - no disease symptoms observed |

### Detailed description of the invention

The following description and examples are shown for exemplary and explanatory purposes and are not intended to limit the scope of the invention.

The features and characteristics illustrated and/or described herein in connection with various examples presented herein may be combined with the features and characteristics of other examples also provided herein, and such modifications and variations are contemplated herein.

The present invention relates to a method for controlling, preventing and/or treating a phytopathogenic fungus causing or capable of causing scab infections in pome fruit plants, in particular in apple (i.e. plants of the genus *Malus*) and/or pear plants (i.e. plants of the genus *Pyrus*). The phytopathogenic fungus causing or capable of causing scab infections in apple and/or pear plants may be a fungus of the *Venturia* genus, including anamorphs thereof. In an embodiment of the invention, the phytopathogenic fungus is *Venturia inaequalis* (apple scab) or *Venturia pyrina* (pear scab), or anamorphs thereof. When the phytopathogenic fungus is *Venturia inaequalis* (apple scab), or an anamorph thereof, the plant is an apple or pear plant, preferably an apple plant, and when the phytopathogenic fungus is *Venturia pyrina* (pear scab), or an anamorph thereof, the plant is a pear plant. *Venturia inaequalis* may also be described under the names of *Fusicladium dendriticum*, *Spilocaea pomi* or *Spilocaea pyracanthae.*

The method of the invention comprises applying a fungicidally effective amount of zoxamide to a plant (i.e. the apple plant or pear plant), at least one part of a said plant and/or at least one seed of a said plant, or to the soil in which a said plant is growing or in which it is desired to grow (i.e. the method comprises treating said plant, at least one part of said plant and/or at least one seed of said plant, or the soil in which the plant is growing or in which it is desired to grow with a fungicidally effective amount of zoxamide).

It follows that the invention also relates to use of a fungicidally effective amount of zoxamide for controlling, preventing and/or treating a phytopathogenic fungus causing or capable of causing scab infections in apple and pear plants, wherein said zoxamide is applied to a said plant, at least one part of a said plant and/or at least one seed of a said plant, or the soil in which a said plant is growing or in which it is desired to grow.

Zoxamide is 3,5-dichloro-*N*-(1-chloro-3-methyl-2-oxopentan-3-yl)-4-methylbenzamide; CAS number: 156052-68-5]. When applied in said method and use, zoxamide may be applied alone (i.e. without any other substance) or comprised in a composition (i.e. with another substance). When applied in said method and use, zoxamide is typically applied with another substance (i.e. zoxamide is comprised in a composition).

Thus, also described herein are compositions comprising zoxamide in a fungicidally effective amount to control, prevent and/or treat scab in apples and pears. Such a composition comprises zoxamide in a fungicidally effective amount suitable for controlling, preventing and/or treating a phytopathogenic fungus capable of causing scab infections in apple and pear plants. Controlling, preventing and/or treating a phytopathogenic fungus may take place before or after planting (i.e. before or after seeding or transplanting), and before or after infection with said fungus occurs. Alternatively, controlling, preventing and/or treating a phytopathogenic fungus may take place after detection of said fungus occurs (e.g. once scab formation is detected).

The compositions comprising zoxamide that are applied and described herein can be formulated into any customary type of agrochemical composition, e. g. a solution, emulsion, suspension, dust, powder, paste, granule, pressing or capsule, or a mixture thereof. Exemplary composition types include suspensions [e.g. Suspension Concentrate (SC), or Flowable concentrate for Seed treatment (FS)], dispersions [e.g. Oil Dispersion (OD)], emulsifiable concentrates (EC), emulsions (e.g. Emulsion, oil in Water (EW), Emulsion, water in Oil (EO), Emulsion for Seed treatment (ES), or Microemulsion (ME)], capsules [e.g. Capsule Suspension (CS), or a mixed formulation of CS and SC (ZC)], pastes, pastilles, wettable powders or dusts [e.g. Wettable Powder (WP), water Soluble Powder (SP), Water dispersible powder for slurry seed treatment (WS), or Dispersible Powder (DP)], pressings [e.g. Briquette (BR), Tablet (TB)], or granules [e.g. Water-dispersible Granules (WG), water Soluble Granules (SG), or Granule (GR)], etc. In one embodiment, zoxamide is applied to said apple and/or pear plant, at least one part of said plant and/or the at least one seed of said plant, or to the soil in which said plant is growing or in which it is desired to grow as an aqueous dilution of a suspension concentrate or a water-dispersible granule.

Application of zoxamide to the crops (i.e. apple or pear plant, at least one part of said plant and/or at least one seed of said plant, or the soil in which the plant is growing or in which it is desired to grow) infested by or susceptible to pests (i.e. phytopathogenic fungus causing or capable of causing scab infection in said apple plants and/or pear plants) takes place in a customary manner adapted to the application form. Thus, the mode by which zoxamide is applied to the apple or pear plant, at least one part of said plant and/or at least one seed of said plant, or the soil in which the plant is growing or in which it is desired to grow is influenced by whether zoxamide is applied alone or is applied as a composition. When applied as a composition, the mode of application is further influenced by which of the foregoing composition types zoxamide is formulated as. For example, when zoxamide is applied to an apple tree as an emulsifiable concentrate, the emulsifiable concentrate can be mixed with (i.e. diluted with) water to a desired concentration and sprayed on the crops by any of a diverse range of sprayers, including a mechanical or manual sprayer. In one aspect of the invention, the zoxamide compositions described herein can further comprise one or more agrochemically acceptable adjuvants/auxiliaries. An adjuvant or an auxiliary in the context of the invention is a component which enhances the performance effect of the formulation. Examples of adjuvants/auxiliaries are agents which promote one or more of the following effects: retention, spreading, attachment to the leaf surface, penetration, a physical effect, a chemical effect, a technical effect and a biological effect, etc.

Examples for suitable adjuvants/auxiliaries are solvents, liquid carriers, solid carriers or fillers, surfactants, dispersants, anti-foaming agents, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, colorants, tackifiers and binders. Thus, when zoxamide is applied as a composition in the method and use of the invention, said composition may additionally comprise at least one adjuvant or auxiliary selected from the group consisting of: a solvent, a liquid carrier, a solid carrier or filler, a surfactant, a dispersant, an anti-foaming agent, an emulsifier, a wetter, an adjuvant, a solubilizer, a penetration enhancer, a protective colloid, an adhesion agent, a thickener, a humectant, a repellent, an attractant, a feeding stimulant, a compatibilizer, a bactericide, an anti-freezing agent, an anti-foaming agent, a colorant, a tackifier and a binder. Definitions and/or examples of the foregoing auxiliaries/adjuvants may be found in Singh, A. et al; Basics of Agrochemical Formulations (2023), Brillion Publishing (ISBN: 9789392725128), or in Young, B.; Matthews, J. L.; Whitford, F.; Compendium of Herbicide Adjuvants (2016) 13th edition, Purdue University and Southern Illinois University, or in Pacanoski, Z.; Herbicides and Adjuvants, in Herbicides, Physiology of Action, and Safety (2015) IntechOpen (ISBN: 978-953-51-2217-3).

All formulations described herein can be produced in a known manner, for example by mixing the active compound(s) with adjuvants/auxiliaries.

Furthermore, provided herein are methods for controlling, preventing or treating phytopathogenic fungi causing or capable of causing scab infections in apple and/or pear plants, wherein the method comprises applying a fungicidally effective amount of zoxamide, alone or in combination with one or more other active ingredients, to apple and/or pear species (i.e. to at least one apple and/or pear plant, at least one part of a said plant and/or at least one seed of a said plant, or to the soil in which a said plant is growing or in which it is desired to grow).

In some embodiments, one or more active ingredients (compounds) may be applied, together with zoxamide, to combat scab, such as compounds selected from the group:
a) benzimidazoles
b) carboxamides
c) copper compounds
d) dithiocarbamates
e) organochlorine
f) pyrimidines
g) pyrrole compounds
h) strobilurins
i) triazole compounds.

Thus, in some embodiments, at least one active ingredient (compounds) may be applied, together with zoxamide, to combat scab, wherein each compound is selected from the group consisting of:
a) a benzimidazole, wherein said benzimidazole may be selected from the group consisting of: benomyl, carbendazim, fuberidazole, thiabendazole, thiophanate and thiophanate-methyl
b) a carboxamide, wherein said carboxamide may be selected from the group consisting of: bixafen, boscalid, carboxin, carpropamid, cyflufenamid, diclocymet, ethaboxam, fenhexamid, fenoxanil, flumetover, fluopicolide, fluopyram, flutolanil, furametpyr, isopyrazam, isotianil, mandipropamid, mepronil, oxycarboxin, penflufen, penthiopyrad, picobenzamide, sedaxane, tecloftalam, thifluzamide, tiadinil, tolfenpyrad and silthiofam
c) a copper compound (i.e. a substance comprising at least one copper atom), wherein said copper compound may be selected from the group consisting of: basic copper chloride, basic copper sulfate, copper, copper (nonylphenyl) sulphonate, cupric hydroxide, cupric sulphate pentahydrate, cupric sulphate(anhydrous), DBEDC, dodecylbenzenesulphonic acid bisethylenediamine copper(II) complex and oxine copper
d) a dithiocarbamate, wherein said dithiocarbamate may be selected from the group consisting of: mancozeb, maneb, manzeb, metiram, polycarbamate, propineb, thiuram, zineb and ziram
e) an organochlorine, wherein said organochlorine may be selected from the group consisting of: chlorothalonil, fthalide and quintozene
f) a pyrimidine, wherein said pyrimidine may be selected from the group consisting of: bupirimate, cyprodinil, diflumetorim, dimethirimol, fenarimol, ferimzone, mepanipyrim, nuarimol and pyrimethanil
g) a pyrrole compound, wherein said pyrrole may be selected from the group consisting of: fenpiclonil, fludioxonil and fluoroimide
h) a strobilurin, wherein said strobilurin may be selected from the group consisting of: azoxystrobin, dimoxystrobin, fluoxastrobin, kresoxim-methyl, metominostrobin, orysastrobin, picoxystrobin, pyraclostrobin, pyrametostrobin, pyraoxystrobin and trifloxystrobin
i) a triazole, wherein said triazole may be selected from the group consisting of: azaconazole, bitertanol, bromuconazole, cyproconazole, clotrimazole, diclobutrazol, difenoconazole, diniconazole, epoxiconazole, etaconazole, fenbuconazole, fluotrimazole, fluquinconazole, flusilazole, flutriafol, furconazole, hexaconazole, imibenconazole, ipconazole, mefentrifluconazole, metconazole, myclobutanil, penconazole, propiconazole, paclobutrazol, prothioconazole, quinconazole, simeconazole, triazbutil, tebuconazole, tetraconazole, triadimefon, triadimenol, triticonazole and uniconazole, or said triazole may be selected from the group consisting of: bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, mefentrifluconazole, metconazole, myclobutanil, penconazole, propiconazole, prothioconazole, simeconazole, tebuconazole, tetraconazole, triadimefon, triadimenol and triticonazole.

In other embodiments, at least one active ingredient may be applied, together with zoxamide, to combat scab, wherein each compound is selected from the group consisting of:
a) a benzimidazole compound like carbendazim, thiophanate methyl or benomyl;
b) a carboxamide compound like fluxapyroxad, boscalid or benzovindiflupyr;
c) a copper compound;
d) a dithiocarbamate compound like maneb, mancozeb or zineb;
e) an anilino pyrimidine compound like pyrimethanil, cyprodinil or mepanipyrim;
g) a pyrrole compound like fludioxonil;
h) a strobilurin compound like trifloxystrobin, kresoxim-methyl or pyraclostrobin; and
i) a triazole compound like difenoconazole, penconazole, fluquinconazole, pyrifenox, flusilazole or mefentrifluconazole; or
j) a mixture thereof.

One or more compounds (i.e. one or more active ingredients), as listed above, can be used in controlling, preventing and/or treating a phytopathogenic fungus causing or capable of causing scab infections in apple and/or pear plants simultaneously with application of zoxamide, prior to application of zoxamide, or post application of zoxamide. In other words, applying the at least one active ingredient listed above to a said plant, at least one part of a said plant and/or at least one seed of a said plant, or to the soil in which a said plant is growing or in which it is desired to grow may take place simultaneously with applying the fungicidally effective amount of zoxamide to said plant, at least one part of said plant and/or said at least one seed of said plant, or to said soil in which said plant is growing or in which it is desired to grow. Alternatively, applying the at least one active ingredient listed above to a said plant, at least one part of a said plant and/or at least one seed of a said plant, or to the soil in which a said plant is growing or in which it is desired to grow, may take place prior to or after applying the fungicidally effective amount of zoxamide to said plant, at least one part of said plant and/or at least one seed of said plant, or to the soil in which said plant is growing or in which it is desired to grow.

In some embodiments, the method further comprises applying one or more compounds selected from the group consisting of: a strobilurin, a triazole compound, and a carboxamide, or a triazole compound or a carboxamide compound. In one embodiment, the method of the invention further comprises applying one or more compounds selected from the group consisting of: a strobilurin selected from the group consisting of: azoxystrobin, dimoxystrobin, fluoxastrobin, kresoxim-methyl, metominostrobin, orysastrobin, picoxystrobin, pyraclostrobin, pyrametostrobin, pyraoxystrobin and trifloxystrobin; a triazole compound selected from the group consisting of: bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, mefentrifluconazole, metconazole, myclobutanil, penconazole, propiconazole, prothioconazole, simeconazole, tebuconazole, tetraconazole, triadimefon, triadimenol and triticonazole; and a carboxamide selected from the group consisting of: bixafen, boscalid, carboxin, carpropamid, cyflufenamid, diclocymet, ethaboxam, fenhexamid, fenoxanil, flumetover, fluopicolide, fluopyram, flutolanil, furametpyr, isopyrazam, isotianil, mandipropamid, mepronil, oxycarboxin, penflufen, penthiopyrad, picobenzamide, sedaxane, tecloftalam, thifluzamide, tiadinil, tolfenpyrad and silthiofam. In such embodiments, applying the triazole and/or strobilurin and/or carboxamide as listed above, may take place simultaneously with application of the zoxamide, prior to application of the zoxamide or post application with the zoxamide.

In one embodiment, a triazole is selected from the group consisting of: mefentrifluconazole, penconazole and tebuconazole, or a combination thereof.

In another embodiment, a strobilurin is selected from the group consisting of: azoxystrobin, fluoxastrobin, kresoxim-methyl, mandestrobin, metominostrobin, picoxystrobin, pyraclostrobin and trifloxystrobin, or a combination thereof.

In another embodiment, a strobilurin is selected from the group consisting of: kresoxim-methyl, pyraclostrobin and trifloxystrobin.

In the invention, zoxamide (or zoxamide and any other substance, optionally as a composition of zoxamide with another substance) is applied to an apple and/or pear plant, at least one part of said plant and/or the at least one seed of said plant, or to the soil in which said plant is growing or in which it is desired to grow. Each part of said plant may be selected from the group consisting of: leaf (i.e. foliar application), stem, root, flower and fruit. Each part of said plant may instead be a leaf or fruit. In one embodiment of the invention, zoxamide is applied as a foliar treatment.

Zoxamide (or zoxamide and any other substance, optionally as a composition of zoxamide with another substance) may be applied to said apple and/or pear plant, at least one part of said plant and/or the at least one seed of said plant, or to the soil in which said plant is growing or in which it is desired to grow, by techniques selected from the group consisting of: spraying (including fogging, misting, atomizing, volatilizing), dusting, dripping, banding, baiting, specific granule placement or wiping. In an embodiment of the invention, zoxamide is applied by spraying or dusting.

Zoxamide may be applied to said apple and/or pear plant, at least one part of said plant and/or the at least one seed of said plant, or to the soil in which said plant is growing or in which it is desired to grow, in an amount of 1 g/ha to 2000 g/ha. In an embodiment of the invention, zoxamide is applied in an amount of 10 g/ha to 1000 g/ha. In another embodiment of the invention, zoxamide is applied in an amount of 20 g/ha to 400 g/ha, or in an amount of 40 g/ha to 300 g/ha. In one embodiment of the invention, zoxamide is applied in an amount of 60 g/ha to 200 g/ha. In the above, "g/ha" may refer to g/ha LWA (g/ha leaf wall area) or g/ha ground area. In another embodiment, zoxamide is applied by foliar application in an amount of 10 g/ha to 100 g/ha LWA or in 20 g/ha to 200 g/ha ground area, for example after dilution of a suspension concentrate with water.

Thus, the mode of application of zoxamide (or zoxamide and any other substance, optionally as a composition of zoxamide with said other substance) may comprise what it is applied to (i.e. apple and/or pear plant, at least one part of said plant and/or the at least one seed of said plant, or to the soil in which said plant is growing or in which it is desired to grow), and/or how it is applied (i.e. by what technique), and/or in what formulation (e.g. in what amount, with what other ingredients), and/or at what moment (i.e. prior to detection of disease symptoms or after the infection occurs), and/or whether said other substance is applied with, prior to or after said zoxamide is applied, as described above.

In a further aspect of the invention, controlling, preventing and/or treating the plant is performed, after the planting and prior to detection of disease symptoms and/or after the infection occurs.

The invention also relates to the following aspects:
1. Method for controlling, preventing and/or treating of phytopathogenic fungi causing scab infections in apples and pears, wherein the method comprises treating the plants, plant parts and/or the seeds or the soil in which the plant is growing or in which it is desired to grow with a fungicidally effective amount of zoxamide.
2. Method according to aspect 1, wherein the phytopathogenic fungi are selected from *Venturia inaequalis* or *Venturia pyrina.*
3. Method according to any one of aspects 1 and 2, wherein the treatment is applied as a foliar treatment.
4. Method according to any one of aspects 1 to 3, wherein the treatment is applied by spraying or dusting.
5. Method according to any one of aspects 1 to 4, wherein zoxamide is applied in an amount of about 10 g/ha to about 1000 g/ha.
6. Method according to aspect 5, wherein zoxamide is applied in amount of about 20 g/ha to about 400 g/ha.
7. Method according to aspect 6, wherein zoxamide is applied in amount of about 40 g/ha to about 300 g/ha.
8. Method according to aspect 6, wherein zoxamide is applied in amount of about 60 g/ha to about 200 g/ha.
9. Method according to any one of aspects 1 to 8, wherein further is applied one or more compounds selected from the group of:
   a) strobilurins selected from azoxystrobin, dimoxystrobin, fluoxastrobin, kresoxim-methyl, metominostrobin, orysastrobin, picoxystrobin, pyraclostrobin, pyrametostrobin, pyraoxystrobin, trifloxystrobin
   b) triazole compounds selected from bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, mefentrifluconazole, metconazole, myclobutanil, penconazole, propiconazole, prothioconazole, simeconazole, tebuconazole, tetraconazole, triadimefon, triadimenol, triticonazole,
   c) carboxamides selected from bixafen, boscalid, carboxin, carpropamid, cyflufenamid, diclocymet, ethaboxam, fenhexamid, fenoxanil, flumetover, fluopicolide, fluopyram, flutolanil, furametpyr, isopyrazam, isotianil, mandipropamid, mepronil, oxycarboxin, penflufen, penthiopyrad, picobenzamide, sedaxane, tecloftalam, thifluzamide, tiadinil, tolfenpyrad, silthiofam.

### Example 1: Field trials

Field trials were conducted to evaluate the effect and efficacy of zoxamide on scab disease on apple and pear trees, where said trees were naturally infected by the disease.

Pest severity (PESSEV) was recorded on leaves for all plots (0%: no infestation / 100%: leaves completely covered). The percentage of pest severity is given for the untreated plots in the table below. For the tested treatments, the efficacy is calculated by comparing the pest severity to the untreated plot (0%: no control / 100%: complete control).

The treatments are sprayed at a dose rate expressed per hectare of leaf wall. This method assures that the same amount of product is applied to a given foliar surface, no matter the dimensions of the orchard. This is the standard dose expression for vertically treated crops in Europe. It is mandatory for all plant protection products applied to vertically growing crops to use this dose rate expression for demonstrating efficacy.

Leaf Wall Area (LWA): The area of the foliage surface per hectare ground area. Calculated using foliage height and spacing between rows.

Formula: foliage height (m) x row sides applied (usually 2) x 10000 m² / spacing between rows (m).

The following treatments were tested in the trials:

| UNTREATED (no products applied, natural disease progression) | | |
|---|---|---|
| Zoxamide 450 SC | 0.06 L/ha LWA | 27 g zoxamide / ha LWA |
| Zoxamide 450 SC | 0.1 L/ha LWA | 45 g zoxamide / ha LWA |
| Zoxamide 450 SC | 0.15 L/ha LWA | 67.5 g zoxamide / ha LWA |
| Zoxamide 450 SC | 0.2 L/ha LWA | 90 g zoxamide / ha LWA |
| Difenoconazole 250 EC | 0.1 L/ha LWA | |

Each of the tested treatments was replicated on 4 plots, randomly distributed across the test site area. All treatments (including the reference product) were applied, after dilution with water, using the same spray volume. The products were diluted with water to obtain the required concentration for the treatments.

In particular, Zoxamide 450 SC was diluted with water and tested at dose rates of 27, 45, 67.5 and 90 g zoxamide/ha LWA.

The zoxamide formulation used in the trials, Zoxamide 450 SC, is a suspension concentrate containing 450 g/L zoxamide.

All test treatments were repeated at a 7-10 day interval which is the standard interval for treatments against scab in apple and pear. It is also the registered interval for the reference product difenoconazole 250 EC.

Assessments were made at the following timings:
A: 26-37 days after first application (5-10 days after the last application)
B: 42-56 days after first application (5-10 days after the last application)
C: 65-77 days after first application (14-15 days after final application)

Obtained data and results are shown in Table 1 and Table 2.

Taking into account standard growing dimensions of apple and pear orchards, the conversion factor from L/ha LWA to L/ha ground area ranges from 1 to 2, resulting in the following ranges:

| Tested rate | Hectare around rate |
|---|---|
| 27 g zoxamide / ha LWA | 27-54 g zoxamide / ha ground |
| 45 g zoxamide / ha LWA | 45-90 g zoxamide / ha ground |
| 67.5 g zoxamide / ha LWA | 67.5-135 g zoxamide / ha ground |
| 90 g zoxamide / ha LWA | 90-180 g zoxamide / ha ground |

**Table 1. Field trial - severity of scab (Venturia inaequalis) on apple after treatment**

| | | | Trial 1 | | | Trial 2 | | | Trial 3 | | |
|---|---|---|---|---|---|---|---|---|---|---|---|
| | | | A | B | C | A | B | C | A | B | C |
| Part Rated | | | LEAF | LEAF | LEAF | LEAF | LEAF | LEAF | LEAF | LEAF | LEAF |
| Rating Type | | | PESSEV | PESSEV | PESSEV | PESSEV | PESSEV | PESSEV | PESSEV | PESSEV | PESSEV |
| Rating Unit/Min/Max | | | %UNCK | %UNCK | %UNCK | %UNCK | %UNCK | %UNCK | %UNCK | %UNCK | %UNCK |
| Days after First Application | | | 33 | 47 | 77 | 30 | 44 | 65 | 35 | 49 | 70 |
| Days After Last Application | | | 5 | 5 | 14 | 7 | 7 | 14 | 7 | 7 | 14 |
| UNTREATED (%) | | | 0.9 | 9.7 | 39.1 | 0.5 | 0.9 | 1.9 | 0.5 | 25.0 | 26.2 |
| Zoxamide 450 SC | 0.06 | L/ha LWA | 54.3 | 19.0 | 19.7 | 66.2 | 75.3 | 71.2 | 80.3 | 25.9 | 24.6 |
| Zoxamide 450 SC | 0.1 | L/ha LWA | 76.5 | 22.3 | 31.3 | 57.1 | 79.3 | 77.1 | 89.1 | 47.9 | 45.9 |
| Zoxamide 450 SC | 0.15 | L/ha LWA | 87.3 | 40.2 | 37.6 | 73.6 | 80.1 | 79.1 | 98.3 | 46.1 | 45.4 |
| Zoxamide 450 SC | 0.2 | L/ha LWA | 87.2 | 57.3 | 60.8 | 83.2 | 85.3 | 81.4 | 99.7 | 63.0 | 62.1 |
| Difenoconazole 250 EC | 0.1 | L/ha LWA | 81.9 | 69.3 | 86.2 | *66.7* | 88.8 | 85.4 | 100.0 | 69.0 | 65.9 |

**Table 2. Field trial - severity of scab (Venturia pyrina) on pear after treatment**

| | | | Trial 4 | | | Trial 5 | | | Trial 6 | | |
|---|---|---|---|---|---|---|---|---|---|---|---|
| | | | A | B | C | A | B | C | A | B | C |
| Part Rated | | | LEAF | LEAF | LEAF | LEAF | LEAF | LEAF | LEAF | LEAF | LEAF |
| Rating Type | | | PESSEV | PESSEV | PESSEV | PESSEV | PESSEV | PESSEV | PESSEV | PESSEV | PESSEV |
| Rating Unit/Min/Max | | | %UNCK | %UNCK | %UNCK | %UNCK | %UNCK | %UNCK | %UNCK | %UNCK | %UNCK |
| Days after First Application | | | 26 | 42 | 72 | 37 | 56 | 71 | 35 | 49 | 71 |
| Days After Last Application | | | 10 | 7 | 14 | 7 | 10 | 15 | 10 | 6 | 14 |
| UNTREATED (%) | | | 0.9 | 6.2 | 6.6 | 2.8 | 4.6 | 5.2 | 2.3 | 6.6 | 8.6 |
| Zoxamide 450 SC | 0.06 | L/ha LWA | / | / | / | 56.9 | 66.9 | 65.4 | 61.6 | 65.6 | 57.5 |
| Zoxamide 450 SC | 0.1 | L/ha LWA | 95.6 | 86.1 | 84.6 | 71.3 | 82.6 | 82.6 | 72.1 | 78.1 | 74.4 |
| Zoxamide 450 SC | 0.15 | L/ha LWA | 100.0 | 90.8 | 89.7 | 86.0 | 90.8 | 92.3 | 86.6 | 89.1 | 83.9 |
| Zoxamide 450 SC | 0.2 | L/ha LWA | 100.0 | 93.5 | 94.2 | 86.4 | 94.5 | 97.0 | 93.6 | 96.7 | 90.8 |
| Difenoconazole 250 EC | 0.1 | L/ha LWA | 94.4 | 77.5 | 72.2 | 78.5 | 88.2 | 92.4 | 85.3 | 92.4 | 89.5 |

## Claims

1. A method for controlling, preventing and/or treating a phytopathogenic fungus causing or capable of causing scab infection in apple and/or pear plants, wherein the method comprises applying a fungicidally effective amount of zoxamide to a said plant, at least one part of a said plant and/or at least one seed of a said plant, or to the soil in which a said plant is growing or in which it is desired to grow.

2. The method according to claim 1, wherein the phytopathogenic fungus is *Venturia inaequalis* or *Venturia pyrina.*

3. The method according to any one of claims 1 and 2, wherein the zoxamide is applied as a foliar treatment.

4. The method according to any one of claims 1 to 3, wherein the zoxamide is applied by spraying or dusting.

5. The method according to any one of claims 1 to 4, wherein the zoxamide is applied in an amount of 10 g/ha to 1000 g/ha.

6. The method according to claim 5, wherein the zoxamide is applied in an amount of 20 g/ha to 400 g/ha.

7. The method according to claim 6, wherein the zoxamide is applied in an amount of 40 g/ha to 300 g/ha.

8. The method according to claim 6, wherein the zoxamide is applied in an amount of 60 g/ha to 200 g/ha.

9. The method according to any one of claims 1 to 8, wherein said method further comprises applying one or more compounds selected from the group consisting of:
a) a strobilurin selected from the group consisting of: azoxystrobin, dimoxystrobin, fluoxastrobin, kresoxim-methyl, metominostrobin, orysastrobin, picoxystrobin, pyraclostrobin, pyrametostrobin, pyraoxystrobin and trifloxystrobin;
b) a triazole selected from the group consisting of: bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, mefentrifluconazole, metconazole, myclobutanil, penconazole, propiconazole, prothioconazole, simeconazole, tebuconazole, tetraconazole, triadimefon, triadimenol and triticonazole; and
c) a carboxamide selected from the group consisting of: bixafen, boscalid, carboxin, carpropamid, cyflufenamid, diclocymet, ethaboxam, fenhexamid, fenoxanil, flumetover, fluopicolide, fluopyram, flutolanil, furametpyr, isopyrazam, isotianil, mandipropamid, mepronil, oxycarboxin, penflufen, penthiopyrad, picobenzamide, sedaxane, tecloftalam, thifluzamide, tiadinil, tolfenpyrad and silthiofam.

10. The method according to any one of claims 1 to 9, wherein said method comprises applying zoxamide by foliar application after dilution with water of a suspension concentrate or water-dispersible granules comprising said zoxamide.
